# EUROPÄISCHE PATENTSCHRIFT

(11) **EP 0 974 880 B1**
(45) Veröffentlichungstag und Bekanntmachung des Hinweises auf die Patenterteilung: **24.09.2003**
(21) Anmeldenummer: 98113462.0
(22) Anmeldetag: 20.07.1998
(51) Int. Cl.: G05B 13/02, G05B 11/42

(54) **Selbstadaptiver PID-Regler**
Autoadaptive PID controller
Régulateur PID autoadaptatif

(43) Veröffentlichungstag der Anmeldung: 26.01.2000
(73) Patentinhaber: Siemens Building Technologies AG, 6300 Zug (CH)
(72) Erfinder: Wüest, Josef, 6312 Steinhausen (CH)
(74) Vertreter: Berg, Peter, Dipl.-Ing.

(56) Entgegenhaltungen:
- EP-A- 0 786 708
- WO-A-97/29407
- US-A- 5 691 896

## Beschreibung

Die Erfindung bezieht sich auf einen selbstadaptiven PID-Regler gemäss dem Oberbegriff des Anspruchs 1.

Solche PID-Regler eignen sich zur Regelung von Prozessen, beispielsweise zur Regelung der Temperatur in der Heizungs-, Lüftungs- und Klimatechnik.

Ein PID-Regler der im Oberbegriff des Anspruchs 1 genannten Art ist aus der DE-A-4433332 bekannt.

Der Erfindung liegt die Aufgabe zugrunde, einen selbstadaptiven PID-Regler zu schaffen, der besonders einfach ist und sich auch dann durch ein vorzügliches Regelverhalten auszeichnet, wenn die Regelstrecke ungünstig dimensioniert ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung am Beispiel eines PID-Temperaturreglers näher erläutert.

Es zeigen:
Fig. 1 ein Blockschaltbild eines selbstadaptiven PID-Temperaturreglers und
Fig. 2 ein Diagramm.

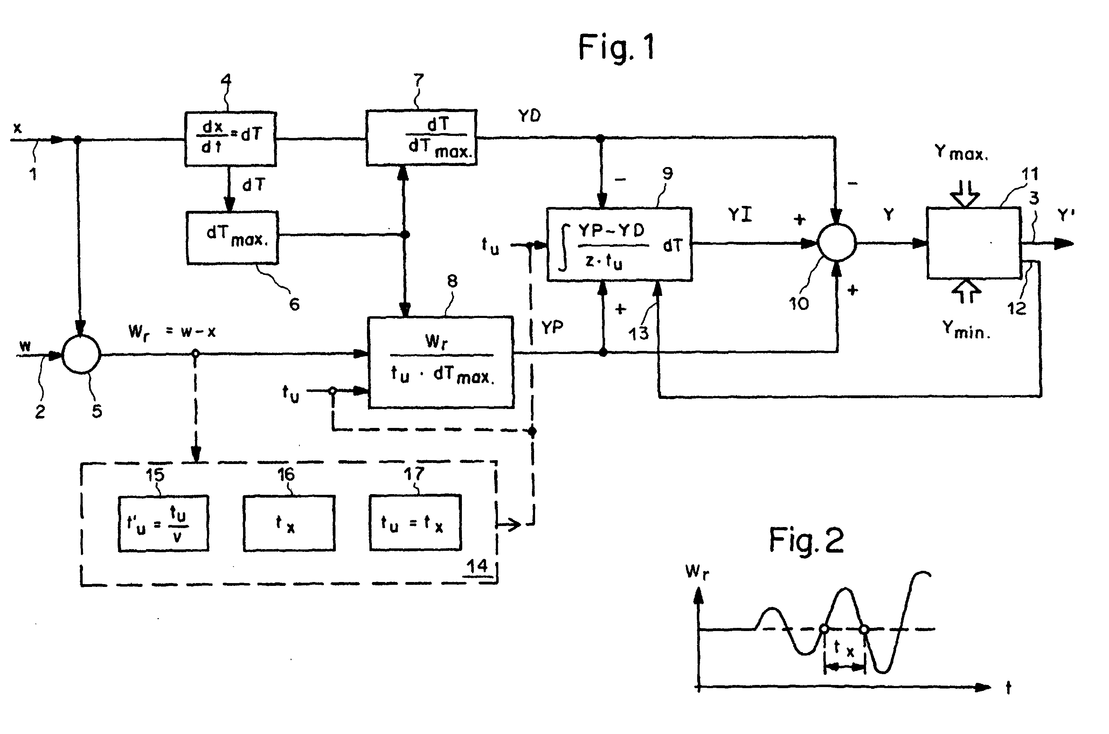

Dem in der Fig. 1 dargestellten Regler sind zwei Eingangsgrössen zugeführt, nämlich der Istwert x der Regelgrösse an einem Eingang 1 und der Sollwert w der Regelgrösse an einem Eingang 2. Im Falle eines Temperaturreglers ist der Istwert x eine Temperatur, beispielweise die Temperatur eines Heizkessels, die mit Hilfe des Reglers geregelt wird. Am Ausgang 3 des Reglers erscheint ein in seiner Grösse begrenztes Stellsignal Y', das aus einem Stellsignal Y abgeleitet ist.

Der Istwert x ist einem Rechenglied 4 zugeführt. Ferner gelangt der Istwert x zusammen mit dem Sollwert w zu einem Differenzglied 5, das die Regelabweichung Wᵣ = w - x berechnet. Das Rechenglied 4 ermittelt die zeitlichen Ableitung dT = dx/dt der Regelgrösse x. Dem Rechenglied 4 sind ein Maximalwertspeicher 6 zur Speicherung des Maximalwertes dTₘₐₓ dieser zeitlichen Ableitung dT = dx/dt sowie ein Rechenglied 7 nachgeschaltet, das den Differentialanteil YD = dT/ dTₘₐₓ des Stellsignals Y aus dem Maximalwert dTₘₐₓ berechnet.

Das Rechenglied 6 ist ausgangsseitig auf das Rechenglied 7 und auf ein Rechenglied 8 geführt. Der Ausgang des Differenzgliedes 5 ist mit dem Rechenglied 8 verbunden. Diesem Rechenglied 8 ist ein Signal zugeführt, das die Totzeit tᵤ der Regelstrecke darstellt. Das Rechenglied 8 berechnet den Proportionalanteil YP = Wᵣ/ tᵤ . dTₘₐₓ des Stellsignals Y.

Die Ausgänge der Rechenglieder 7 und 8 sind einerseits mit je einem Eingang eines Rechengliedes 9 und andererseits mit je einem Eingang eines Summiergliedes 10 verbunden. Das Rechenglied 9 ist ebenfalls mit der Totzeit tu der Regelstrecke als weiteres Eingangssignal beaufschlagt und berechnet den Integralanteil YI des Stellsignals Y nach der Formel YI = ∫[(YP - YD) / z . tᵤ] dt, wobei z eine Zahl im Bereich von 2 bis 7 bedeutet.

Das Summierglied 10 bildet das Stellsignal Y = YP - YD + YI. Sein Ausgang führt über einen Begrenzer 11 an den Ausgang 3 des Reglers. Der Begrenzer 11 begrenzt das Stellsignal Y innerhalb der Grenzwerte Yₘₐₓ und Yₘᵢₙ und erzeugt somit ein in seiner Grösse begrenztes Stellsignal Y'. Der Begrenzer 11 besitzt einen Steuerausgang 12, der mit einem Steuereingang 13 des Rechengliedes 9 verbunden ist und das Rechenglied 9 sperrt, wenn das Stellsignal Y ausserhalb des durch Yₘₐₓ und Yₘᵢₙ begrenzten Arbeitsbereichs liegt.

Beim beschriebenen Regler wird im Rechenglied 4 die zeitliche Ableitung des Istwertes x, das heisst im Falle eines Temperaturreglers die Temperaturänderung pro Zeiteinheit ermittelt. Im Maximalwertspeicher 6 wird jeweils der grösste Wert dTₘₐₓ des Temperaturanstiegs bzw. Temperaturabfalls pro Zeiteinheit gespeichert. Jedesmal, wenn bei einer neuen Messung der zuvor gespeicherte Maximalwert überschritten wird, wird der alte Maximaltwert durch den neuen Maximalwert überschrieben. Die Bestimmung des Maximalwertes dTₘₐₓ erfolgt bei einem Temperaturregler während einer Zeiteinheit von beispielsweise einigen Sekunden, damit der Temperaturanstieg genügend gross ist und nicht durch Ungenauigkeiten der Messung, beispielsweise durch die Ungenauigkeit eines A/D-Wandlers verfälscht wird. Es ist möglich, dass der höchste Maximalwert dTₘₐₓ bereits bei der Inbetriebsetzung des Temperaturreglers und der zugehörigen Heizungsanlage auftritt und im ordentlichen Betrieb nie mehr erreicht oder überschritten wird. Es kann aber auch vorkommen, dass im ordentlichen Betrieb, wenn zum Beispiel ausserordentliche Witterungsbedingungen herrschen, der zuvor gültige Maximalwert dTₘₐₓ durch einen neuen, grösseren Wert überschrieben wird. Im allgemeinen ist die Bestimmung des Maximalwertes dTₘₐₓ nur während der Inbetriebsetzung notwendig. Wird jedoch dieser Maximalwert bei jedem Neustart des Reglers oder auch während des Betriebes immer neu bestimmt, so besteht die Möglichkeit, dass sich der Regler an veränderte thermische Bedingungen anpassen kann.

Gemäss der Erfindung wird der Differentialanteil YD des Stellsignals Y aus dem gespeicherten Maximalwert dTₘₐₓ bestimmt. Vorteilhaft geschieht dies dadurch, dass das Rechenglied 7 den Differentialanteil YD des Stellsignals Y nach der Formel YD = dT/ dTₘₐₓ berechnet.

Die beschriebene Bestimmung des Differentialanteils YD aus dem gespeicherten Maximalwert dTₘₐₓ ermöglicht, auch den Proportionalanteil YP und den Integralanteil YI des Stellsignals Y auf besonders einfache Weise zu bestimmen. Wie im folgenden gezeigt wird, erfolgt die Bestimmung des Proportionalanteils YP des Stellsignals Y vorteilhaft aus der Regelabweichung Wᵣ, der Totzeit tᵤ der Regelstrecke und dem gespeicherten Maximalwert (dTₘₐₓ). Vorzugsweise erfolgt die Bestimmung des Integralanteils YI des Stellsignals Y aus dem Differentialanteil YD, dem Proportionalanteil YP und aus der Totzeit tᵤ der Regelstrecke.

Für das Proportionalband Xp des Reglers gilt die Gleichung Xp = tᵤ . dTₘₐₓ.

Der Proportionalanteil YP ist YP = Wr / Xp = Wᵣ/ tᵤ . dTₘₐₓ. Nach dieser Formel wird im Rechenglied 8 der Proportionalanteil YP berechnet. Der Wert für die Totzeit tᵤ kann mit Hilfe eines Eingabemittels - z.B. in analoger Form mittels eines Potentiometers oder in digitaler Form mittels einer Tastatur - in das Rechenglied 8 eingegeben werden. Wie weiter unten gezeigt wird, kann ein Näherungswert für die Totzeit tᵤ auch durch den Regler selbst ermittelt werden.

Die Nachstellzeit tₙ des Reglers ist tₙ = z . tᵤ.

Der Integralanteil YI ist YI = ∫[(YP - YD) / Tₙ] dt = ∫[(YP - YD) / z . tᵤ] dt. Nach dieser Gleichung wird im Rechenglied 9 der Integralanteil YI berechnet. Je nach dem gewünschten Regelverhalten kann z = 2 bis 7 gewählt werden. In der Literatur ist die Angabe z = 3 zu finden. Versuche haben gezeigt, dass vorteilhaft z = 5 ist, da dann das Regelverhalten besonders stabil ist.

Wie schon früher erwähnt, wird der Integralanteil YI vorteilhaft nur nachgeführt, wenn das Stellsignal Y ausserhalb des durch Yₘₐₓ und Yₘᵢₙ begrenzten Arbeitsbereichs liegt.

Das Summierglied 10 berechnet das Stellsignal Y nach der Formel Y = YP - YD + YI.

Die erfindungsgemässe Bestimmung der zeitlichen Ableitung dT = dx/dt der Regelgrösse x, Abspeicherung des ermittelten Maximalwertes dTₘₐₓ dieser zeitlichen Ableitung dT = dx/dt und Bestimmung des Differentialanteils YD des Stellsignals Y aus dem gespeicherten Maximalwert dTₘₐₓ kann beim beschriebenen PID-Regler mit sehr einfachen Mitteln erfolgen. Es sind hierzu lediglich zwei Rechenglieder 4, 7 und ein Speicherglied 6 erforderlich. Wird der PID-Regler als Digitalregler ausgeführt, sind hierzu ausserordentlich wenig Speicherplatz und Rechenzeit erforderlich. Untersuchungen haben gezeigt, dass der Regler auch unter schwierigen Regelbedingungen zu einem ausgezeichneten Regelverhalten führt. Beispielsweise zeigt der Regler auch dann ein robustes Regelverhalten, wenn in der Regelstrecke enorme Laständerungen oder andere Änderungen der Parameter auftreten oder wenn die Totzeit tᵤ falsch eingestellt ist.

Bei einem Temperaturregler ist der Maximalwert dTₘₐₓ dann am grössten, wenn die Differenz zwischen erzeugter Energie und abgeführter Energie am grössten ist. Aus dem Anstieg bzw. dem Abfall der Temperatur T kann somit festgestellt werden, wie stark die produzierte Wärme von der abgenommenen Wärme abweicht. Der Maximalwert dTₘₐₓ ist proportional zum Reziprokwert der Wärmekapazität der Regelstrecke. Somit werden der Differentialanteil YD und der Proportionalanteil YP des Stellsignals Y automatisch an die Wärmekapazität und somit an die Trägheit der Regelstrecke angepasst. Bei grossem Maximalwert dTₘₐₓ ergibt sich selbsttätig ein grosses Proportionalband Xp und eine kleine Regelverstärkung. Wird der Regler zur Temperaturregelung eines überdimensionierten Heizungsanlage verwendet, werden dadurch die Regelparameter selbsttätig optimiert.

Anstatt die Totzeit tᵤ manuell einzustellen, ist es auch möglich, den Regler so auszubilden, dass er selbsttätig einen Näherungswert für die Totzeit tᵤ bestimmt und diesen Näherungswert den Rechengliedern 8 und 9 als Eingangsgrösse für den Wert tᵤ zuführen. Hierzu dient vorteilhaft ein in der Fig. 1 gestrichelt gezeichneter Mess- und Speicherbloch 14, der aus einem Schaltglied 15, einem Messglied 16 und einem Speicherglied 17 besteht. Im Auslieferungszustand des Reglers ist im Speicherglied 17 als Totzeit tᵤ der Regelstrecke ein Standardwert eingespeichert. Zur Selbstadaption der Totzeit tᵤ an die Regelstrecke wird der Regler temporär in einen Schwingzustand überführt und mittels des Messgliedes 16 gemäss der Fig. 2 der Zeitabstand tₓ zwischen zwei Nulldurchgängen der Regelabweichung Wᵣ oder der Regelgrösse x gemessen. Dieser Zeitabstand tₓ wir dann im Speicherglied 17 gespeichert und den Rechengliedern 8 und 9 als Näherungswert für die Totzeit tᵤ zugeführt.

Die Überführung des Reglers in einen Schwingzustand zur Messung des Zeitabstandes tₓ erfolgt vorzugsweise dadurch, dass das Proportionalband Xp des Reglers während einer Adaptionsphase temporär praktisch auf Null gestellt wird. Hierzu dient das Schaltglied 15, welches einen temporären Wert t'ᵤ = tᵤ/v bestimmt, wobei v eine Zahl gleich oder grösser als 10 ist. Somit ist temporär t'ᵤ = tᵤ/10, wodurch der Proportionalanteil YP des Stellsignals temporär stark anwächst und dementsprechend das Proportionalband Xp praktisch Null wird, so dass der Regler gemäss der Fig. 2 zu schwingen beginnt und der Zeitabstand tₓ gemessen werden kann. Diese Adaptionsphase ist beendet, sobald tᵤ = tₓ anstelle des früheren Standardwertes abgespeichert ist, und kann periodisch wiederholt werden.

## Patentansprüche

1. Selbstadaptiver PID-Regler, der von der Regelgrösse (x) und vom Sollwert (w) beaufschlagbar ist und in Abhängigkeit von der Regelabweichung (Wᵣ) ein Stellsignal (Y) bestimmt, **dadurch gekennzeichnet, dass** ein erstes Rechenglied (4) zur Bestimmung der zeitlichen Ableitung (dT = dx/dt) der Regelgrösse (x) und ein Maximalwertspeicher (6) zur Speicherung des Maximalwertes (dTₘₐₓ) dieser zeitlichen Ableitung (dT = dx/dt) vorgesehen sind und dass ein zweites Rechenglied (7) zur Bestimmung des Differentialanteils (YD) des Stellsignals (Y) aus dem gespeicherten Maximalwert (dTₘₐₓ) vorgesehen ist.

2. PID-Regler nach Anspruch 1, **dadurch gekennzeichnet, dass** das zweite Rechenglied (7) den Differentialanteil YD des Stellsignals (Y) nach der Formel YD = dT/ dTₘₐₓ berechnet, wobei dT die zeitliche Ableitung der Regelgrösse (x) und dTₘₐₓ den Maximalwert dieser zeitlichen Ableitung bedeutet.

3. PID-Regler nach Anspruch 1 oder 2, **dadurch gekennzeichnet, dass** Mittel (8, 9) zur Bestimmung des Proportionalanteils (YP) des Stellsignals (Y) aus der Regelabweichung (Wᵣ), der Totzeit (tᵤ) der Regelstrecke und dem gespeicherten Maximalwert (dTₘₐₓ) sowie zur Bestimmung des Integralanteils (YI) des Stellsignals (Y) aus dem Differentialanteil (YD), dem Proportionalanteil (YP) und aus der Totzeit (tᵤ) der Regelstrecke vorgesehen sind.

4. PID-Regler nach Anspruch 3, **dadurch gekennzeichnet, dass** ein drittes Rechenglied (8) zur Berechnung des Proportionalanteils YP des Stellsignals (Y) nach der Formel YP = Wᵣ/ tᵤ . dTₘₐₓ vorgesehen ist, wobei Wᵣ die Regelabweichung und tᵤ die Totzeit der Regelstrecke bedeutet.

5. PID-Regler nach Anspruch 4, **dadurch gekennzeichnet, dass** ein viertes Rechenglied (9) zur Berechnung des Integralanteils YI des Stellsignals (Y) nach der Formel YI = ∫[(YP - YD) / z . tᵤ] dt vorgesehen ist, wobei z eine Zahl im Bereich von 2 bis 7 ist.

6. PID-Regler nach Anspruch 5, **dadurch gekennzeichnet, dass** z = 5 ist.

7. PID-Regler nach einem der Ansprüche 4 bis 6, **dadurch gekennzeichnet, dass** der Wert der Totzeit (tᵤ) als Eingangsgrösse des dritten Rechengliedes (8) und des vierten Rechengliedes (9) einstellbar ist.

8. PID-Regler nach einem der Ansprüche 4 bis 6, **dadurch gekennzeichnet, dass** Mittel (15) zur temporären Überführung des Reglers in einen Schwingzustand und ein Messglied (16) zur Messung des Zeitabstandes (tₓ) zwischen zwei Nulldurchgängen der Regelgrösse (x) oder der Regelabweichung (Wᵣ) während des temporären Schwingzustandes vorgesehen sind und dass dieser Zeitabstand (tₓ) dem dritten Rechenglied (8) und dem vierten Rechenglied (9) als Näherungswert für die Totzeit (tᵤ) zugeführt ist.

9. PID-Regler nach Anspruch 8, **dadurch gekennzeichnet, dass** ein Schaltglied (15) vorgesehen ist, welches jeweils vor der Messung des Zeitabstandes (tₓ) das Proportionalband (Xp) des Reglers gegen Null stellt.

10. PID-Regler nach Anspruch 9, **dadurch gekennzeichnet, dass** ein Schaltglied (15) einen temporären Wert t'ᵤ = tᵤ/v für die Totzeit tᵤ bestimmt, wobei v eine Zahl von mindestens 10 ist.

## Claims

1. A self-adaptive PID controller which can be acted upon by the regulating variable (x) and by the reference value (w), and a setting signal (Y) is determined which is dependent upon the standard deviation (Wᵣ), **characterised in that** a first computer member (4) is provided for determining the derivation in respect of time (dT = dx/dt) of the regulating variable (x), and a maximum value memory (6) is provided for storing the maximum value (dTₘₐₓ) of that derivation in respect of time (dT = dx/dt), and **characterised in that** a second computer member (7) is provided for determining the differential part (YD) of the setting signal (Y) on the basis of the stored maximum value (dTₘₐₓ).

2. A PID controller according to Claim 1, **characterised in that** the second computer member (7) calculates the differential part YD of the setting signal (Y) in accordance with the formula YD = dT/ dTₘₐₓ, wherein dT denotes the derivation in respect of time of the regulating variable (x) and dTₘₐₓ denotes the maximum value of that derivation in respect of time.

3. A PID controller according to Claim 1 or Claim 2, **characterised in that** means (8, 9) are provided for determining the proportional part (YP) of the setting signal (Y) on the basis of the standard deviation (Wᵣ), the idle time (tᵤ) of the controlled member, and the stored maximum value (dTₘₐₓ) and also for determining the integral part (YI) of the setting signal (Y) on the basis of the differential part (YD), the proportional part (YP) and on the basis of the idle time (tᵤ) of the controlled member.

4. A PID controller according to Claim 3, **characterised in that** a third computer member (8) is provided for calculating the proportional part YP of the setting signal (Y) in accordance with the formula YP = Wᵣ/tᵤ . dTₘₐₓ, wherein Wᵣ denotes the standard deviation and tᵤ denotes the idle time of the controlled member.

5. A PID controller according to Claim 4, **characterised in that** a fourth computer member (9) is provided for calculating the integral part YI of the setting signal (Y) in accordance with the formula YI = ∫ [(YP - YD) / z . tᵤ] dt, wherein z is a number in the range of 2 to 7.

6. A PID controller according to Claim 5, **characterised in that** z = 5.

7. A PID controller according to one of Claims 4 to 6, **characterised in that** the value of the idle time (tᵤ) can be set as the input quantity of the third computer member (8) and of the fourth computer member (9).

8. A PID controller according to one of Claims 4 to 6, **characterised in that** means (15) are provided for temporarily bringing the controller into a condition of vibration, and a measuring member (16) is provided for measuring the distance in time (tₓ) between two zero crossings (x) of the regulating variable (x) or the standard deviation (Wᵣ) during the temporary condition of vibration, and **characterised in that** said distance in time (tₓ) is fed in the form of an approximated value for the idle time (tᵤ) to the third computer member (8) and to the fourth computer member (9).

9. A PID controller according to Claim 8, **characterised in that** a switch member (15) is provided which sets the proportional band (Xp) of the controller towards zero each time prior to measurement of the distance in time (tₓ).

10. A PID controller according to Claim 9, **characterised in that** a switch member (15) determines a temporary value t'ᵤ = tᵤ/v for the idle time tᵤ, wherein v is a number of at least 10.

## Revendications

1. Régulateur PID autoadaptatif, qui peut être alimenté par la grandeur de réglage (X) et par la valeur prescrite (W) et détermine un signal de commande (Y) en fonction de l'écart de réglage (Wᵣ), **caractérisé en ce qu'**un premier organe de calcul (4) et une mémoire de valeur maximale (6) sont prévus respectivement pour la détermination de la dérivée dans le temps (dT = dx/dt) de la grandeur de réglage (X) et pour la mémorisation de la valeur maximale (dTₘₐₓ) de cette dérivée dans le temps (dT = dx/dt) et **en ce qu'**un deuxième organe de calcul (7) est prévu pour la détermination de la partie différentielle (YD) du signal de commande (Y) à partir de la valeur maximale (dTₘₐₓ) mémorisée.

2. Régulateur PID selon la revendication 1, **caractérisé en ce que** le deuxième organe de calcul (7) calcule la partie différentielle YD du signal de commande (Y) selon la formule YD = dT/dTₘₐₓ, dT étant la dérivée dans le temps de la grandeur de réglage (X) et dTₘₐₓ la valeur maximale de cette dérivée dans le temps.

3. Régulateur PID selon la revendication 1 ou 2, **caractérisé en ce que** des moyens (8, 9) sont prévus pour la détermination de la partie proportionnelle (YP) du signal de commande (Y) à partir de l'écart de réglage (Wᵣ), du temps mort (tu) du système réglé et de la valeur maximale (dTₘₐₓ) mémorisée ainsi que pour la détermination de la partie intégrale (YI) du signal de commande (Y) à partir de la partie différentielle (YD), de la partie proportionnelle (YP) et du temps mort (tᵤ) du système réglé.

4. Régulateur PID selon la revendication 3, **caractérisé en ce qu'**un troisième organe de calcul (8) est prévu pour le calcul de la partie proportionnelle YP du signal de commande (Y) selon la formule YP= Wᵣ/t₁₁.dTₘₐₓ, Wᵣ représentant l'écart de réglage et tu le temps mort du système réglé.

5. Régulateur PID selon la revendication 4, **caractérisé en ce qu'**un quatrième organe de calcul (9) est prévu pour le calcul de la partie intégrale YI du signal de commande (Y) selon la formule YI = ∫[(YP-YD)/z.tᵤ](dt), z étant un nombre dans la plage de 2 à 7.

6. Régulateur PID selon la revendication 5, **caractérisé en ce que** z = 5.

7. Régulateur PID selon l'une quelconque des revendications 4 à 6, **caractérisé en ce que** la valeur du temps mort (tᵤ) peut être réglée en tant que grandeur d'entrée du troisième organe de calcul (8) et du quatrième organe de calcul (9).

8. Régulateur PID selon l'une quelconque des revendications 4 à 6, **caractérisé en ce qu'**il est prévu des moyens (15) pour le passage temporaire du régulateur dans un état vibrant et un organe de mesure (16) pour la mesure de l'intervalle de temps (tₓ) entre deux passages par zéro de la grandeur de réglage (X) ou de l'écart de réglage (Wᵣ) pendant l'état vibrant temporaire et **en ce que** cet intervalle de temps (tₓ) est amené au troisième organe de calcul (8) et au quatrième organe de calcul (9) en tant que valeur approximative pour le temps mort (tᵤ).

9. Régulateur PID selon la revendication 8, **caractérisé en ce qu'**il est prévu un organe de commutation (lb) qui positionne la bande proportionnelle (Xp) du régulateur vers zéro respectivement avant la mesure de l'intervalle de temps (tₓ).

10. Régulateur PID selon la revendication 9, **caractérisé en ce qu'**un organe de commutation (15) détermine une valeur temporaire t'ᵤ = tᵤ/v pour le temps mort tᵤ, v étant un nombre égal au moins à 10.
